Europäisches Patentamt

European Patent Office

Office européen des brevets

(19)

(11) **EP 1 610 498 A1**

(12) **EUROPEAN PATENT APPLICATION**

(43) Date of publication:
**28.12.2005 Bulletin 2005/52**

(51) Int Cl.$^7$: **H04L 12/40**

(21) Application number: **04425450.6**

(22) Date of filing: **21.06.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(71) Applicant: **Gefran S.p.A.**<br>**25050 Provaglio d'Iseo (Brescia) (IT)** | (72) Inventor: **Flammini, Alessandra**<br>**25000 Brescia (IT)**<br><br>(74) Representative: **Botti, Mario**<br>**Botti & Ferrari S.r.l.,**<br>**Via Locatelli, 5**<br>**20124 Milano (IT)** |

(54) **Synchronization and communication protocol for remote process**

(57)     The invention relates to a communication protocol whereby a master device is virtually connected to N slave devices, where the number N is typically smaller than 7 but may be as large as 21.

In particular, the invention concerns a system as above having an isochronous cyclical architecture based on switched Ethernet 100BaseT.

The protocol reduces the adjustment jitter by synchronizing the remote processes as to input reading and output writing for each slave device in the network, thereby preventing clashes between Ethernet packets.

The protocol auto-configures within less than 100 msec from the network power-on and auto-detects the network topology not only in the respect of the slave devices that are present, but also of the number of switches, while assigning its own timings.

**FIG. 5**

EP 1 610 498 A1

**Description**

<u>Field of Application</u>

The present invention relates to a synchronization and communication protocol for remote processes, as well as to a corresponding auto-configuration method for automatically detecting a network topology.

Specifically, the invention relates to a so-called isochronous cyclical type of architecture based on switched Ethernet 100BaseT, which is to establish a virtual connection between a master device and a plurality N of slave devices.

<u>Prior Art</u>

In the field of industrial automation, it is current practice to establish communications via fieldbuses.

Fieldbus is a term adopted by IEC (International Electrotechnical Commission) to denote, within an automated process of an industrial plant, a standard of "serial" communication between different electronic devices that concur in implementing the process and include, inter alia, field devices (sensors, actuators, etc.) and control devices (PLCs).

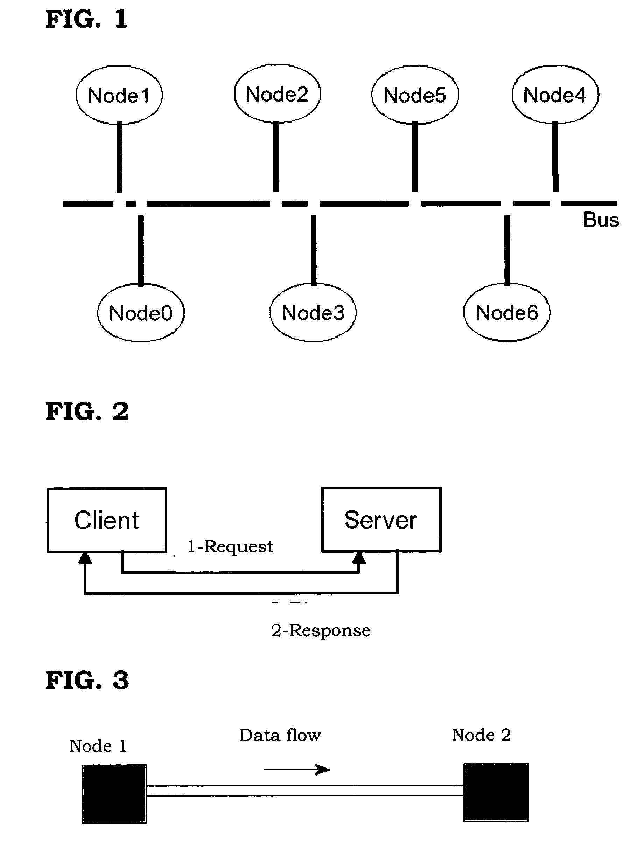

Each device arranged to cooperate in carrying to effect the process is known as a "node". Figure 1 shows schematically an example of plural nodes connected to one fieldbus.

The problem to be faced in such a context is that of the long distances that separate the various plant components, as well as of the standardization of the signals to be issued in order for the devices to communicate with one another. Figure 2 shows a simple client/server layout corresponding to the interconnection mode of devices in an industrial plant ambient.

Internodal communication is usually handled by a conventional protocol which is characteristic to each fieldbus type. The ISO/OSI model is the reference for such protocols and is based on seven levels:

Application (description of the interface to the application)

Presentation (code conversion and syntax checking);

Session (handling the work sessions)

Transport (opening and closing the connections)

Network (routing information)

Data Link (formatting and checking for correctness of frames)

Physical (physical characteristics: electrical levels, encoding, etc.)

Communication protocols are made necessary by that apparatus from different brand suppliers are to be linked and placed in mutual communication.

However, not all of the applications adhere to the ISO/OSI model in full.

Going through all of the above seven levels is a time-consuming practice even at the high processing rates that modem microprocessors afford, and one that is inadequate to meet the time requirements of an effective process control.

Thus, there exists a demand for protocols which can improve the process efficiency as to speed of data transmission, while also making for a more robust system as to its ability to deliver informational contents, ease of operation, and configuration flexibility.

Fieldbuses may be of different kinds.

In the client/server model, a so-called Applicative Process is client to a service provided by another applicative process.

In another conventional model, known as the Producer/ (Distributor) / Consumer model, a data producer makes the data available (where applicable, upon demand by a distributor) to all of the potential users. With this model, the data is propagated through the network in a "broadcasting" mode, its composition being therefore safeguarded.

Thus, there are two fundamental aspects to the choice of a fieldbus, namely:

performance;

obsolescence time, and past and prospective compatibility.

Performance largely depends on the bus access method. In particular, BPUmax or maximum useful passband, is the useful band that is available to a master device node when a fieldbus system includes but two nodes and data transmission occurs in one direction only, as shown in Figure 3.

The variation of the actual BPU from BPUmax as the number of nodes changes provides a good parameter for comparing the performance of different architectures.

Accordingly, the layering of the protocol is effective not only to reduce the complexity by having the device intercommunication provided through abstraction levels and in a near-transparent way to the end user, but also to minimize the delay due to fresh nodes being connected in the network structure.

In addition, a protocol must be able to accommodate structural changes in the network without requiring manual adjustments, i.e. be able to respond to such changes as the addition or removal of nodes in a suitable way to foster an auto-configuration of sort.

The underlying technical problem of this invention is to provide a communication protocol which effectively reduces the transmit and receive times through a synchronization mechanism arranged to act between the devices that partake in the exchange of data as the process is running at an industrial plant.

Furthermore, the method should minimize transmit time by reducing the amount of time to be set aside for adjustment, and by handling the steps for configuring and installing new network "components" in a substantially independent way.

## Summary of the Invention

The solution idea on which the invention is based is that of synchronizing the remote devices that will be active in the process relative to one another, using a communication system which effectively suppresses the regulations jitter and makes the remote input/output communications and exchanges quite similar to those occurring locally.

Based on the above solution idea, the technical problem is solved by a communication protocol that provides for a refresh period of the inputs, and for an update period of the outputs, either period being shorter than a PLC execution period, while doing away with the need of communication-dedicated processors.

The features and advantages of the protocol methodology according to this invention are more clearly brought forth in the following description of an embodiment thereof, given by way of non-limitative example with reference to the accompanying drawings.

## Brief Description of the Drawings

Figure 1 is a schematic representation of devices being connected to a fieldbus.

Figure 2 shows schematically a client/ server model as a viable choice for a type of network.

Figure 3 shows schematically a Maximum PassBand as the maximum passband available to a master device when only two nodes are present in the fieldbus channel and the data is issued unidirectionally.

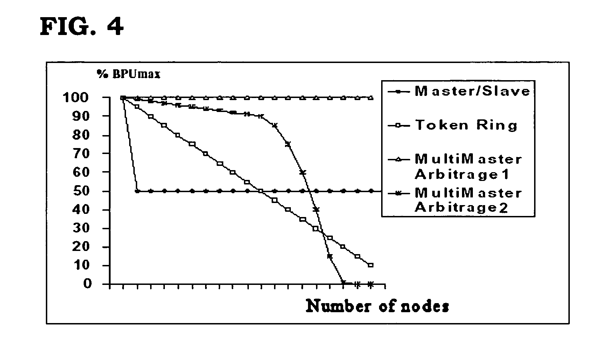

Figure 4 is a graph illustrating the BPU behavior versus the number of nodes in a network and the selected topology for the network.

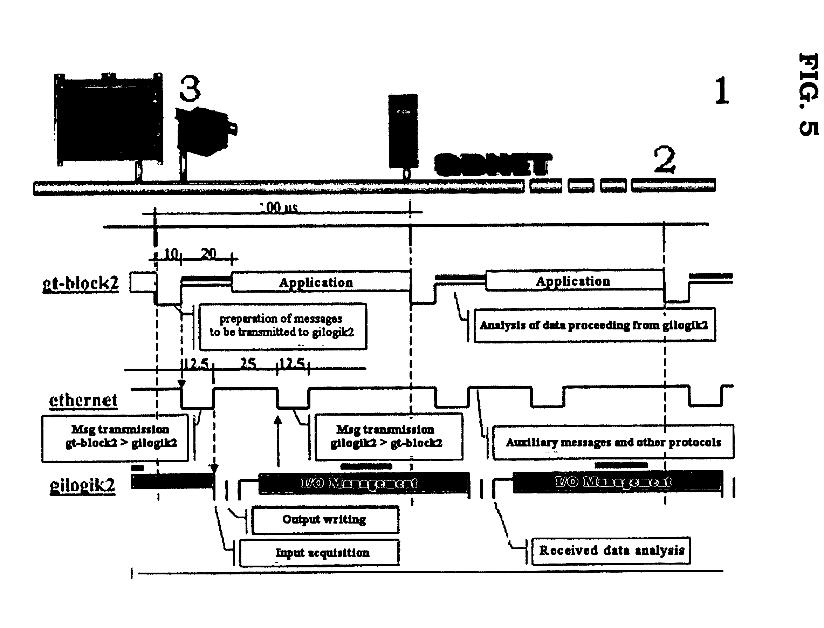

Figure 5 illustrates in schematic form the operation of the protocol (1) according to the inventive methodology, with special emphasis on the linking network (2) and the remote devices (3) connected to it.

## Detailed Description

With reference to the drawing views and special regard to the example of Figure 2, a communication protocol according to this invention is generally shown at 1 in schematic form which is intended for synchronizing remote devices (2) interconnected by a switched Ethernet (3) and is arranged to cooperate in carrying out processes within an industrial plant.

This protocol 1 allows an auto-configuration and auto-detection mechanism to be built for the topology of the network that interconnects the devices.

The inventive protocol will be denoted GD-NET throughout the remainder of this description.

GD-NET is a communication protocol whereby the communication between a device, referred to as the master device named "Vulcano", and a plurality of other devices, referred to as the slave devices named "Paride", can be improved. Preferably, the number Ns of slave devices would not exceed seven, although the protocol GD-NET can support networks with up to twenty-one slave devices.

The protocol organization is transparent to the applicational software of the master device Vulcano, meaning that the terms (slave device, slot, etc.) employed are transcoded through a lookup table and by virtue of the layered levels allowing the control identifier to be associated with the protocol identifier of the slave device Paride.

In the protocol GD-NET, each device Paride is identified by a slave device code Ns ($1 \leq Ns \leq 7$) and a network code Nr ($1 \leq Nr \leq 3$) of subnetwork membership. Each Paride includes an input database (e.g. 48 words), an output database (e.g. 48 words), and a set of 255 contiguous data structures of 64 words each.

The association of the physical inputs and outputs with each word in the database is a flexible one, and can be programmed by the master Vulcano. The databases are accessible simultaneously at each scan cycle, whereas the data structures are accessible individually at no more than one per scan cycle.

The networks that can be host to the protocol GD-NET are a switched Ethernet type, and comprise Nr subnetworks (it being $1 \leq Nr \leq 3$), each supporting the sequential scanning of Ns slave devices (it being $1 \leq Ns \leq 7$), as follows:

$$\text{Network1} \rightarrow \text{Network2} \rightarrow \text{Network3} \rightarrow \text{Network1} \rightarrow \text{Network2} \rightarrow \text{...}$$

The architecture is isochronous, in the sense that the transmission time for a typical message amounts to Tq=12.5 μs. A typical message comprises 48 input words and 48 output words in a continuous scan, and is supplemented with sporadic access data structures like those mentioned above.

The architecture of the GD-NET protocol is, moreover, a cyclical one in that the master device will be issuing cyclically:

1) a synchronization message;

2) an alias time slot;

3) Ns time slots; and

4) Nn null slots.

In particular:

1) The synchronization message is a broadcast message from the master device to all of the slave devices in a given network. The message contains the outputs from all the Ns slave devices in the particular network and has a duration of M*Tq (typically, M=Ns).

2) Alias time slot; this is a slot of duration A*Tq (A>1) intended for other communications (e.g., individual access to the data structures of a particular slave device, TCP/IP or UDP/IP communications, etc.). The usability and occupation state of this slot is specified in the synchronization message broadcast by the master device. A typical value for A would be 2.

3) The Ns time slots have durations of Tq and contain any answers from the slave devices. The slave device can be programmed to either send out its database at each cycle or only when changed. By contrast, the master device will always send out the outputs even when unchanged.

4) Possible Nn null slots are generally used for synchronizing the networks.

Thus, the overall cycle time Tc, assuming no-delay switching, will typically be Tc=(2Ns+A)*Tq, i.e. dependent on the number of slave devices.

In order to optimize the cycle time Tc, the protocol GD-NET will determine the connection or disconnection of an on-line Paride by controlling plug&play installations. It would be possible for the master device to periodically scan all the slave devices (0 to 7), with period >Tc, to find out if any connected Paride has been disconnected (slave device 1 to 7) and/or if any Paride has been added (slave device 0).

In actual practice, to find out if any active Paride has been disconnected, a sweeping request to supply the database suffices, and to find out if any Paride has been disconnected, only the slave device 0 need be questioned periodically.

A change in the configuration HW of a Paride (change in the configuration of the I/O modules) would be understood as an anomaly, and accordingly, immediately reported to the master device. With the network scan cycle tied to the number of slave devices, the paramount importance of the above auto-detection feature to an optimization of the network efficiency in a virtually instantaneous and independent way is readily appreciated.

Thus, the protocol GD-NET carries out an auto-configuration method to survey the network topology within less than 100 ms from resetting (with 7 slave devices). Configuration messages are, of course, sent out along with the typical cycle message. In particular, all Parides will answer upon resetting as if they were slave devices of the 0 kind, viz. with no allocation of slots. (Possible clashes are settled at the switching stage and only imply some delay, of no consequence since it would occur at the reset stage).

The master device sends out a synchronization message containing a request for configuration data of the slave device 0. All Parides will supply their hardware configuration (how many (of) and which logic input modules, how many (of) and which analog input modules, etc.), including the dipswitch states of Parides at the control level.

The master Vulcano can, by reason of the singleness of the Ethernet address of each Paride, assign a Paride a slave device and network identifiers, while specifying whether the particular Paride is also assigned other network/ slave device codes, so as to have one or a number of databases better refreshed. In addition, the master Vulcano would specify the meaning of each word in the database, in particular the address of the module referred to and the data processing function.

This protocol provides a mechanism for synchronizing with the respect to input reading and output writing, which mechanism not only ensures a jitter-free ($\approx\mu$s) output writing or input reading, but also no jitter between a threshold crossing and the ensuing action.

To optimize the cycle time Tc, Vulcano may launch a synchronization procedure, whereby the master device would broadcast a synchronization message for each network specifying the slave device that is to answer in the broadcast mode. The answer from the slave device would be a message Echo of given length occupying the alias slot.

The introduction of switches in the network structure unavoidably involves some routing delays, i.e. delays brought about by the message reception and the identification of the message destination.

The link topology of the protocol GD-NET will support standard store&forward switches, for which the protocol advantageously provides a minimum of changes to the data direction (first all the messages from the master device to the slave device, and then all the slave-to-master device messages). In this way, the switching delay can be set, as first approximation, at *Nsw\*(Tms+Tsm),* where *Nsw* is the number of switches, *Tms* is the time taken to send the largest message to the slave device from the master one, and Tsm is the time taken to send the largest message to the master device from the slave one.

```
                  |------Paride

Vulcano----Switch---    |----Paride

|----Paride         |----Paride

                        |----Switch----    |----Paride

                                           |----Paride

                                           |----Unrelated
```

Basically, the protocol of this invention has a major advantage in that it enables remote devices of an industrial plant intended to become active in the course of a given process, to be synchronized in a simple and reliable way. The inventive protocol constitutes a communication system apt to suppress adjustment delays and make the remote input/ output communications entirely similar to those occurring locally.

In addition, provision is made for an input refresh/output updating period which is shorter than the execution period of a conventional PLC, yet requires no dedicated processors for the communication steps.

**Claims**

1. A method of establishing communication between a master device and a plurality of Ns slave devices belonging to one set of subnetworks with an isochronous cyclical architecture, such as a switched Ethernet architecture, wherein remote processes are synchronized in the respect of input reading and output writing, **characterized in that** it comprises at least the following steps of communication between master and slave devices:

sending out a message of a predetermined kind in order to set the length of time needed for the transmission;

broadcasting, to all the slave devices, a message containing the outputs from all the Ns slave devices in said network, thereby organizing the message scan cycle;

sending out an alias type of time slot;

sending out a plurality of slots having a predetermined duration (Tq) containing the slave device answers, and sending out possible null slots for synchronization use.

**2.** A method according to Claim 1, **characterized in that** each slave device includes a protocol level, an input database, an output database, and a set of 255 contiguous data structures each composed of 64 words.

**3.** A method according to Claim 1, **characterized in that** the association of said input and output databases with the corresponding physical inputs and outputs of the network is a flexible one adapted for programming by the master device.

**4.** A method according to Claim 1, **characterized in that** each module of said slave devices, including the CPU, is identified in hardware by a position selector and by a word accessed at address "0" and specifying the module type and revision.

**5.** A method according to Claim 1, **characterized in that** said input and output databases can be accessed simultaneously at each scan cycle, said data structures being accessed individually at each scan cycle.

**6.** A method according to Claim 1, **characterized in that** the mechanism of synchronization in the respect of input reading and output writing ensures tendentially no jitter in the input reading and output writing, as well as between a threshold crossing and the ensuing action.

**7.** A method according to Claim 1, **characterized in that** said communication mechanism supports star-connection topologies backed by standard store&forward switching, up to a maximum of three subnetworks and seven slave devices per subnetwork.

**8.** A method according to Claim 1, **characterized in that** said communication mechanism includes sending out messages of different kinds (TCP/IP,UDP/IP) over the same Ethernet cable, the maximum length of the packet for proper dimensioning of the cycle being known beforehand.

**9.** A method of network auto-configuring upon reset within a shorter time than 100 ms, there being at least seven slave devices, by means of a synchronization message issued from the master device to the slave devices 0 (the slave devices being all slave devices 0 at the resetting stage), said message containing a request for configuration data and configuration parameters, such as the number of logic input modules and number of analog input modules, returned by the questioned slave devices

**10.** A method according to Claim 9, **characterized in that** said network configuring mechanism allows a slave device to be assigned a slave device identifier and a network identifier even when said slave device is assigned several slave device/network codes, for improved refresh frequency of one or more databases, viz. raising the priorities thereof.

**11.** A method of plug&play controlling a network in order to add or remove an on-line slave device by either requesting each slave device to supply its database and locating disconnected slave devices, or questioning the slave device of type 0 and locating slave devices newly connected thereto.

**12.** A method of auto-detecting a network topology based on the slave device broadcasting a message ECHO in answer to specific commands from the master device that occupy the slot ALIAS and leaving the calculation of the cycle time Tc unaffected because sent out sporadically.

13. A system interconnecting electronic devices designed to talk and cooperate with one another over a fieldbus of an industrial plant in the course of a given process, **characterized in that** it comprises a communication protocol as claimed in any of Claims 1 to 12.

# FIG. 1

Node1 Node2 Node5 Node4

Bus

Node0 Node3 Node6

# FIG. 2

Client    Server

1-Request

2-Response

# FIG. 3

Node 1          Data flow          Node 2

**FIG. 4**

# FIG. 5

**EP 1 610 498 A1**

| | **European Patent Office** | **EUROPEAN SEARCH REPORT** | **Application Number** EP 04 42 5450 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CENA G ET AL: "Object oriented models and communication protocols in the factory" INDUSTRIAL ELECTRONICS, CONTROL, AND INSTRUMENTATION, 1995., PROCEEDINGS OF THE 1995 IEEE IECON 21ST INTERNATIONAL CONFERENCE ON ORLANDO, FL, USA 6-10 NOV. 1995, NEW YORK, NY, USA,IEEE, US, 6 November 1995 (1995-11-06), pages 1573-1579, XP010154957 ISBN: 0-7803-3026-9 * page 1574, right-hand column, line 4 - line 17 * * page 1575, left-hand column, line 5 - line 16 * * page 1575, right-hand column, line 12 - line 13 * * page 1575, right-hand column, line 17 - line 20 * | 1-8,13 | H04L12/40 |
| A | PEDREIRAS P ET AL: "The FTT-ethernet protocol: merging flexibility, timeliness and efficiency" PROCEEDINGS OF THE 14-TH EUROMICRO CONFERENCE ON REAL-TIME SYSTEMS, 19 June 2002 (2002-06-19), pages 134-142, XP010592747 * figure 1 * * figure 3 * * page 5, left-hand column, line 11 - right-hand column, line 28 * * page 7, left-hand column, line 9 - line 12 * | 1,8,13 | TECHNICAL FIELDS SEARCHED (Int.Cl.7) H04L G05B |

-/--

~~The present search report has been drawn up for all claims~~

| Place of search | Date of completion of the search | Examiner |
|---|---|---|
| The Hague | 9 December 2004 | Tyszka, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**European Patent Office**

## EUROPEAN SEARCH REPORT

Application Number

EP 04 42 5450

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 97/36400 A (BOHM CHRISTER ; GAUFFIN LARS (SE); LINDGREN PER (SE); NET INSIGHT AB () 2 October 1997 (1997-10-02) * figure 2 * * page 4, line 9 - page 5, line 9 * * page 7, line 2 - line 4 * * page 7, line 19 - line 24 * ----- | 1,13 | |
| | | | TECHNICAL FIELDS SEARCHED (Int.Cl.7) |

The present search report has been drawn up for all claims

| Place of search | Date of completion of the search | Examiner |
|---|---|---|
| The Hague | 9 December 2004 | Tyszka, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent

Office

Application Number

EP 04 42 5450

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8,13

13

**European Patent Office**

**LACK OF UNITY OF INVENTION**
**SHEET B**

Application Number

EP 04 42 5450

The Search Division considers that the present European patent application does not comply with the requirements of unity of invention and relates to several inventions or groups of inventions, namely:

1. claims: 1,8,13

    A method of synchronizing a set of subnetworks.

    ---

2. claims: 9,10

    A method of network auto-configuration upon reset.

    ---

3. claim: 11

    A method of controlling removal of a slave device from a network.

    ---

4. claim: 12

    A method of detecting network topology.

    ---

## ANNEX TO THE EUROPEAN SEARCH REPORT
## ON EUROPEAN PATENT APPLICATION NO.

EP 04 42 5450

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2004

| Patent document cited in search report | | Publication date | Patent family member(s) | | Publication date |
|---|---|---|---|---|---|
| WO 9736400 | A | 02-10-1997 | SE | 508794 C2 | 09-11-1998 |
| | | | AU | 2314997 A | 17-10-1997 |
| | | | EP | 0886933 A1 | 30-12-1998 |
| | | | SE | 9601133 A | 10-10-1997 |
| | | | WO | 9736400 A1 | 02-10-1997 |

EPO FORM P0459

For more details about this annex : see Official Journal of the European Patent Office, No. 12/82